Europäisches Patentamt

European Patent Office

Office européen des brevets

(11) Numéro de publication: **0 209 405 B1**

# FASCICULE DE BREVET EUROPEEN

(45) Date de publication de fascicule du brevet:
02.05.91

(51) Int. Cl.⁵: **G02F 1/133**

(21) Numéro de dépôt: 86401143.2

(22) Date de dépôt: 29.05.86

(54) **Dispositif d'affichage à cristaux liquides fonctionnant par transparence.**

(30) Priorité: 04.06.85 FR 8508403

(43) Date de publication de la demande:
21.01.87 Bulletin 87/04

(45) Mention de la délivrance du brevet:
02.05.91 Bulletin 91/18

(84) Etats contractants désignés:
DE FR GB IT

(56) Documents cités:
EP-A- 0 066 496
DE-A- 3 029 122
DE-A- 3 120 601

"Light Control Film", Broschure de la société 3M

(73) Titulaire: **JAEGER**
**2, rue Baudin**
**F-92303 Levallois-Perret(FR)**

(72) Inventeur: **Humbert, Jean**
**23, Avenue des Alizées Port Sud**
**F-91650 Breuillet (Essonne)(FR)**
Inventeur: **Archambaud, Yvan**
**33, rue de Fontarabie**
**F-75020 Paris(FR)**

(74) Mandataire: **Bloch, Robert et al**
**2, square de l'Avenue du Bois**
**F-75116 Paris(FR)**

## Description

La présente invention a pour objet un dispositif d'affichage à cristaux liquides fonctionnant en transparence.

Un tel dispositif est utilisé pour l'affichage de symboles et de données alphanumériques, résultant par exemple de mesures effectuées par les instruments de bord d'un véhicule automobile, nautique ou aéronautique.

A bord d'un tel véhicule, il est souhaitable que le pilote puisse prendre connaissance des informations affichées sans cesser d'observer l'environnement visible à travers le pare-brise, ou le cockpit, de son véhicule.

On connait donc des dispositifs d'affichage à cristaux liquides fonctionnant en transparence, comprenant une plaquette de cristaux liquides, pourvue d'électrodes de commande, normalement transparente, dont des zones, formant symboles et caractères, peuvent devenir opaques lorsqu'on applique sur les électrodes de commande des signaux électriques appropriés. Une telle plaquette de cristaux liquides, parce qu'elle peut transmettre ou non la lumière venant de l'arrière de la plaquette, est dite du type "fonctionnant en transmission". Lorsqu'une telle plaquette est maintenue dans le champ de vision de pilote, celui-ci voit donc apparaître les symboles et caractères à afficher en noir sur un fond constitué par le paysage environnant, par exemple. Ce dispositif présente toutefois l'inconvénient de nécessiter un fond relativement lumineux et il ne permet pas, de nuit, la lecture des informations affichées.

On connaît également d'autres dispositifs d'affichage à cristaux liquides fonctionnant en transparence, éclairés par une source de lumière artificielle et donc lisibles, même de nuit. Dans ces dispositifs, on utilise une plaquette de cristaux liquides d'un type comparable au type précédent, c'est-à-dire fonctionnant en transmission. Une lampe électrique, par exemple, est placée derrière la plaquette. Pour éviter l'éblouissement du pilote par les rayons lumineux provenant de la lampe et passant à travers les zones transparentes de la plaquette, on interpose entre celle-ci et la lampe une lame de matériau transparent, pourvue d'une multitude de volets opaques parallèles et obliques, qui fonctionnent comme dans un store vénitien pour dissimuler la lampe au pilote, tout en laissant passer les rayons lumineux obliques à travers les volets. Ces rayons lumineux éclairent les symboles et caractères à afficher, qui diffusent la lumière et apparaissent ainsi lumineux sur fond sombre. Un dispositif de ce type, visible de nuit, présente cependant le grave inconvénient de ne pas permettre, de jour, en éteignant simplement la lampe, d'utiliser la lumière ambiante et de faire apparaître les symboles et caractères en surimpression sur le paysage, à cause des volets obliques qui arrêtent les rayons lumineux sensiblement horizontaux en provenance de l'extérieur. Un tel dispositif est décrit dans la notice d'utilisation du produit commercialisé sous le nom "Light Control Film" (Film de commande de lumière) par la Société 3M.

On connaît aussi, par la demande européenne EP-A-0 066 496, un dispositif de visualisation tête haute dans lequel on projete, sur une lame transparente pourvue de volets opaques et disposée devant le paysage, l'image lumineuse formée par un tube cathodique.

Par ailleurs, le document DE-A-3 120 601 décrit un dispositif à cristaux liquides fonctionnant en transparence, que l'on éclaire par la tranche lorsque l'ambiance environnante est sombre.

Enfin, le document DE-A-3 029 122 décrit un dispositif à cristaux liquides fonctionnant soit en réflexion, soit en transmission selon la position d'un volet mobile commandé par un moteur.

Tous ces dispositifs sont de mise en oeuvre relativement complexe. La présente invention vise à pallier cet inconvénient en procurant un dispositif d'affichage à cristaux liquides fonctionnant en transparence et permettant à la fois un affichage de jour en surimpression sur le paysage et un affichage lisible de nuit, et qui soit de mise en oeuvre simple.

Elle a pour objet, à cet effet, un dispositif d'affichage à cristaux liquides fonctionnant en transparence, comprenant une plaquette de cristaux liquides fonctionnant en transmission, disposée devant une lame de matériau transparent comportant une pluralité de volets opaques parallèles, caractérisé par le fait que des moyens canalisent la lumière d'une source lumineuse dans une direction sensiblement parallèle à ladite plaquette vers ladite lame disposée pour réfléchir vers ladite plaquette au moins une partie de ladite lumière, lesdits volets étant orientés sensiblement perpendiculairement à ladite plaquette pour arrêter la partie non réfléchie de ladite lumière.

Dans le dispositif de l'invention, utilisé par exemple devant le pare-brise d'une automobile, les rayons lumineux sensiblement horizontaux en provenance de l'extérieur traversent le matériau transparent, sans être arrêtés par les volets opaques, permettant, de jour, un affichage en surimpression sur le paysage. De nuit, la partie de la lumière de la source lumineuse qui est réfléchie sur la feuille de matériau transparent éclaire la plaquette sans risque d'éblouissement et la partie non réfléchie de cette lumière, dirigée sensiblement verticalement, est arrêtée par les volets opaques, pour rester confinée à l'intérieur du dispositif afin de ne pas diffuser dans l'habitacle. Dans cette invention, il est remarquable que la demanderesse soit parvenue au résultat cherché en appliquant, de façon nouvelle, un produit connu. En effet, l'emploi, dans les dispositifs d'affichage, d'une lame de matériau transparent, pourvue d'une multitude de volets opaques, est connue. Cependant l'art antérieur enseigne toujours son emploi en transmission pour ne transmettre la lumière que dans une certaine direction. L'idée de la demandresse a été d'utiliser cette lame en réfléxion, pour éclairer dans l'obscurité, à partir d'une source lumineuse située hors de la vue du pilote, la plaquette de cristaux liquides, et de combiner cette application nouvelle, en réfléxion, avec l'application connue, en transmission, pour parvenir au résultat recherché.

L'invention sera mieux comprise à l'aide de la description suivante de la forme de réalisation préférée du dispositif d'affichage de l'invention, faite en se référant au dessin annexé, sur lequel,

- la figure 1 représente une vue de face du dispositif d'affichage de l'invention;
- la figure 2 représente une vue de profil du dispositif de la figure 1, et
- la figure 3 représente une vue agrandie du détail intérieur au cercle III de la figure 2.

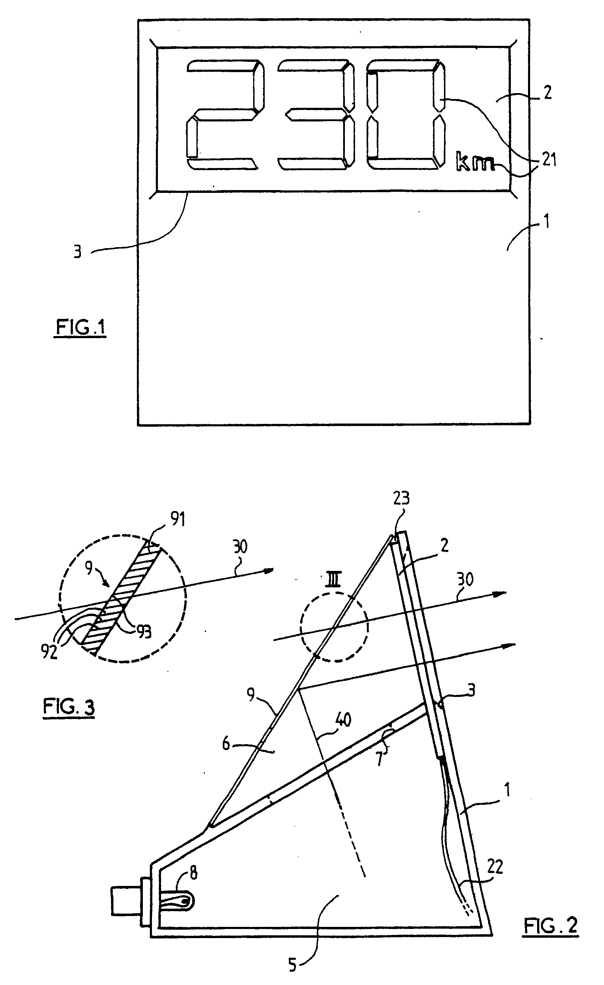

Un dispositif d'affichage à cristaux liquides, fonctionnant en transparence, se présente à la vue du pilote d'un véhicule automobile, de façon que sa partie supérieure, dans la représentation de la figure 1, vienne se placer devant la partie inférieure du pare-brise du véhicule, par exemple.

Le dispositif d'affichage comprend un bâti 1, agencé pour recevoir, derrière une fenêtre 3 pratiquée dans sa partie supérieure, une plaquette 2 de cristaux liquides du type fonctionnant en transmission, normalement transparente, mais dont des zones 21, formant symboles et caractères, peuvent devenir opaques lorsqu'on applique de façon classique, sur des électrodes de commande reliées à une nappe de fils 22 visible sur ta figure 2, des signaux électriques de commande.

Comme le montre la figure 2, ta partie basse du bâti 1 forme une première cavité 5, dans la partie haute de laquelle est ménagée une ouverture, ou fenêtre 7. Une source lumineuse, ici une lampe 8, est montée à l'intérieur de la première cavité 5.

Une lame de matériau transparent 91 pourvue d'une pluralité de volets 92 opaques et parallèles, et de deux faces 93, ici lisses, est disposée obliquement au-dessus de la cavité 5, de façon à former, avec la plaquette 2, une deuxième cavité 6 adjacente et communiquant avec la première cavité 5 par l'ouverture 7. La lame 9 est ici le produit dont il a été question et commercialisé sous le nom "Light Control Film" par la Société 3M.

Comme le montre la figure 3, les volets 92 sont sensiblement horizontaux.

Le dispositif d'affichage qui vient d'être décrit fonctionne comme suit.

En utilisation diurne, la lampe 8 est éteinte et les rayons lumineux tels que le rayon 30 sensiblement horizontaux, en provenance de l'extérieur, après avoir traversé le parebrise non représenté, traversent les interstices entre les volets 92 de la lame 9 et les zones transparentes de la plaquette 2.

Ainsi, les symboles et caractères 21 commandés apparaissent en noir, en surimpression sur le paysage extérieur.

En utilisation nocture, la lampe 8 est allumée et des rayons lumineux tels que le rayon 40, en provenance de la lampe 8, traversent la fenêtre 7 après des réflexions multiples, non représentées, sur les parois de la cavité 5, ou sur un réflecteur non représenté parce que classique. Ces rayons lumineux, ainsi canalisés, sont, comme le rayon 40 réfléchis en partie sur l'interface entre l'air et le matériau transparent 91, interface que représente la face 93 lisse, située du côté de la plaquette 2.

La partie non réfléchie, de direction sensiblement verticale, de la lumière transportée par le rayon 40, est arrêtée par les volets 92, et reste confinée à l'intérieur du dispositif, sans diffusion dans l'habitacle.

Dans la description qui vient d'être faite, en utilisation nocturne, la lumière de la lampe 8 est réfléchie par l'interface entre deux milieux d'indices différents que représente la face 93 lisse située de côté de la plaquette 2. Ceci est possible si la lame 9 fait un angle voisin de 45° avec la verticale ou l'horizontale.

Ceci n'est pas obligatoire, et la lumière de la lampe 8 peut également être réfléchie par un ensemble de stries horizontales ménagées sur la face 93 de la lame située du côté de la plaquette 2. Dans ce cas, la forme des stries, et en particulier l'angle des minuscules et nombreuses facettes présentées à la lumière de la lampe 8 peuvent être ajustés pour que la lame 9 puisse faire un angle différent de 45° avec la verticale, par exemple un angle faible pour réduire 1 encombrement de dispositif.

La fenêtre 7 peut être une simple ouverture, comme représenté, ou elle peut comporter des lamelles opaques orientées sensiblement parallèlement à la plaquette 2 pour contribuer à canaliser la lumière de la lampe, et s'interposer, par exemple, sur le trajet de rayons directs issus de la lampe 8 vers la face arrière de la plaquette.

## Revendications

1. Dispositif d'affichage à cristaux liquides fonctionnant en transparence, comprenant une plaquette (2) de cristaux liquides fonctionnant en transmission, caractérisé par le fait que ladite plaquette (2) est disposée devant une lame (9) de matériau transparent (91) comportant une pluralité de volets opaques parallèles (92), que des moyens (5, 7) canalisent la lumière d'une source lumineuse (8) dans une direction sensiblement parallèle à ladite plaquette (2) vers ladite lame (9) disposée pour réfléchir vers ladite plaquette (2) au moins une partie de ladite lumière, les dits volets (92) étant orientés sensiblement perpendiculairement à ladite plaquette (2) pour arrêter la partie non réfléchie de ladite lumière.

2. Dispositif d'affichage selon la revendication 1, dans lequel lesdits moyens (5, 7) de canalisation de ladite lumière comprennent une cavité(5), à l'intérieur de laquelle est disposée la source lumineuse pourvue de parois opaques et munie de moyens réflecteurs et comportant une fenêtre (7)

3. Dispositif d'affichage selon l'une des revendications 1 et 2, dans lequel des stries sont ménagées sur la face (93) de la lame (9) située du côté de la plaquette (2), afin de réfléchir ladite lumière vers ladite plaquette.

4. Dispositif d'affichage selon la revendication 2, dans lequel ladite fenêtre 97) comporte des lamelles opaques orientées sensiblement parallèlement à ladite plaquette (2) pour s'interposer sur le trajet des rayons directs issus de la lampe (8).

## Claims

1. Liquid crystal display device functioning by transparency, comprising a liquid crystal wafer (2) functioning by transmission, disposed in front of a sheet (9) of transparent material (91) comprising a plurality of parallel opaque flaps (92) characterized in that means (5,7) channel the light from a light source (8) in a direction substantially parallel to said wafer (2) towards said sheet (9) disposed for reflecting back to said wafer (2) at least a part of said light, said flaps (92) being oriented substantially perpendicularly to said wafer (2) for stopping the unreflected part of said light.

2. Display device as claimed in claim 1, wherein said means (5,7) for channelling said light comprise a cavity (5), inside which said light source is disposed, comprising opaque walls and provided with reflecting means and comprising a window (7).

3. Display device as claimed in one of claims 1 and 2, wherein scores are formed in the face (93) of the sheet situated on the wafer (2) side for reflecting said light towards said wafer.

4. Display device as claimed in claim 2, wherein said window (7) comprises opaque strips oriented substantially parallel to said wafer (2) for coming in the path of the direct rays from the lamp (8).

## Ansprüche

1. Durchsichtigkeit-Anzeigevorrichtung mit Flüssigkristallen, welche ein Transmissions-Plättchen (2) mit Flüssigkristallen umfaßt, welches vor einer Platte (9) aus durchsichtigem Material (91) angeordnet ist, die eine Vielzahl von parallelen, lichtundurchlässigen Blenden (92) enthält, dadurch gekennzeichnet, daß Mittel (5,7) das Licht einer Lichtquelle (8) in eine zum Plättchen (2) ungefähr parallele Richtung zur Platte (9) hin leiten, die angeordnet ist, um wenigstens einen Teil des Lichts auf das Plättchen (2) hin zu reflektieren, wobei die Blenden (92) ungefähr senkrecht auf das Plättchen (2) gerichtet sind, um den nicht reflektierten Teil des Lichts aufzuhalten.

2. Anzeigevorrichtung nach Anspruch 1, in welcher die das Licht leitende Mittel (5,7) eine Höhlung (5) umfassen, in deren Innenraum die Lichtquelle angeordnet ist, versehen mit lichtundurchlässigen Wänden, ausgestattet mit reflektierenden Mitteln und ein Fenster (7) umfassend.

3. Anzeigevorrichtung nach einem der Ansprüche 1 und 2, in welcher Streifen auf der auf der Seite des Plättchens (2) gelegenen Fläche (93) der Platte (9) angebracht sind, um das Licht auf das Plättchen hin zu reflektieren.

4. Anzeigevorrichtung nach Anspruch 2, in welcher das Fenster (7) undurchsichtige Lamellen enthält, die ungefähr parallel zum Plättchen (2) gerichtet sind, um den direkten, von der Lampe (8) ausgehenden Strahlen den Weg zu versperren.

FIG.1

FIG. 3

FIG. 2